Europäisches Patentamt

European Patent Office

Office européen des brevets

(19)

(11) Veröffentlichungsnummer: **0 092 665**
**B1**

(12) **EUROPÄISCHE PATENTSCHRIFT**

(45) Veröffentlichungstag der Patentschrift:
**07.01.87**

(21) Anmeldenummer: **83102104.3**

(22) Anmeldetag: **04.03.83**

(51) Int. Cl.⁴: **B 60 R 1/06**

(54) Haltevorrichtung für den Arm eines LKW-Aussenrückblickspiegels.

(30) Priorität: **27.04.82 DE 3215587**

(43) Veröffentlichungstag der Anmeldung:
**02.11.83 Patentblatt 83/44**

(45) Bekanntmachung des Hinweises auf die Patenterteilung:
**07.01.87 Patentblatt 87/2**

(84) Benannte Vertragsstaaten:
**DE NL SE**

(56) Entgegenhaltungen:
**EP - A - 0 018 294**
**DE - A - 2 239 853**
**DE - A - 2 726 740**
**FR - A - 2 287 153**
**GB - A - 1 496 001**

(73) Patentinhaber: **Metallwerk FRESE GmbH,
Moltkestrasse 25, D-5653 Leichlingen (DE)**

(72) Erfinder: **Ritsche, Dieter, Moltkestrasse 25,
D-5653 Leichlingen (DE)**
Erfinder: **Hümmerich, Udo, Dierath 47,
D-5653 Leichlingen 1 (DE)**

(74) Vertreter: **Gille, Christian, Dipl.-Ing. et al, Türk, Gille +
Hrabal Patentanwälte Bruckner Strasse 20,
D-4000 Düsseldorf 13 (DE)**

## Beschreibung

Die Erfindung betrifft eine Haltevorrichtung für Aussenrückblickspiegel von LKW, gemäss dem Oberbegriff des Anspruchs 1.

Es ist bekannt, grosse LKW-Aussenrückblickspiegel mittels eines an der Aussenseite des Fahrerhauses befindlichen bügelartigen Armes zu halten, der mit seinen beiden Enden verschwenkbar an der Karosserie des LkW gelagert ist.

Das eine Ende des Armes ist in einem einfachen Stecklager gelagert, während das Lager am anderen Ende des Armes komplizierter ausgebildet ist, damit sich der Arm nicht ungewollt verdreht. Zu diesem Zweck hat dieses Lager ein Gehäuse, in welches das betreffende Ende des Armes hineinragt und dort entgegen einer Druckfeder axial verschiebbar und verdrehbar, jedoch mittels einer Rast in der normalen Betriebsstellung arretierbar gelagert ist.

Obwohl für alle LKW-Typen gleiche Aussenrückblickspiegel verwendet werden können, lassen sich die Lager und insbesondere das Lagergehäuse des einen Lagers für den bügelartigen Arm des LKW-Aussenrückblickspiegels nicht bei allen LKW-Typen in gleicher Weise benutzen, weil bei den verschiedenen LKW-Typen die Oberfläche der Karosserie im Anbringungsbereich des Aussenrückblickspiegels unterschiedliche Konturen aufweist. Deshalb ist es notwendig, eine grössere Anzahl von Lagern und insbesondere Lagergehäusen für die verschiedenen LKW-Typen bereit zu stellen, die zwar in ihrer grundsätzlichen Bauweise und Funktion gleich sind, jedoch eine dem jeweiligen Fahrzeugtyp angepasste Montagefläche haben. Dies gilt insbesondere für das Lager, in welchem der bügelartige Arm in der normalen Betriebsstellung eingerastet gehalten wird. Aus dem Dokument DE-A 2 239 853 ist, gemäss dem Oberbegriff des Anspruchs 1, eine Haltevorrichtung für den Aussenrückblickspiegel von LKW bekannt, bei der das Gehäuse des Lagers für das Ende des bügelartigen Tragarmes des Aussenrückblickspiegels mittels einer Schwalbenschwanzführung mit der an der Karosserie des LKW anzubringenden Konsole verbunden ist.

Das Gehäuse ist von der Konsole separates Bauteil und kann auf die Konsole aufgesteckt werden.

Der Erfindung liegt die Aufgabe zugrunde, einen einfachen Weg zu weisen, wie das eine Rasthalterung bildende Lager für das eine Ende des bügelartigen Armes von LKW-Aussenrückblickspiegeln den verschiedensten LKW-Typen angepasst werden kann.

Diese Aufgabe wird erfindungsgemäss dadurch gelöst, dass das Gehäuse dieses Lagers aus zwei zusammensteckbaren Teilen besteht, von denen das eine die an die Karosserie anlegbare Wand aufweist und das andere Teil das eigentliche Lager mit der Rasteinrichtung für den Haltearm des Aussenrückblickspiegels enthält. Dadurch, dass die als Montageplatte dienende Rückwand des Gehäuses als separates Bauteil ausgebildet ist, das an dem die Lagerung aufnehmenden Teil des Gehäuses angebracht werden kann, ist man in der Lage, dieses Lager in einfacher Weise den verschiedensten LKW-Typen und insbesondere den Stellen der Karosserie derselben, an denen der Aussenrückblickspiegel montiert werden soll, anzupassen. Es ist lediglich erforderlich, für die Anpassung an unterschiedliche Fahrzeugtypen die Rückwand des Gehäuses unterschiedlich zu gestalten, d.h. ihre Auflagefläche gewölbt, geneigt oder abgeschrägt auszubilden und ggfs. mit Montagelöchern zu versehen, während der übrige Teil des Lagers und insbesondere auch des Gehäuses keine Anpassung an unterschiedliche Fahrzeugtypen erfordert. Da die Rückwand des Gehäuses von dem das eigentliche Lager aufweisenden Teil des Gehäuses getrennt ausgebildet ist, benötigt man für den Einsatz des LKW-Aussenrückblickspiegels an unterschiedlichen LKW-Typen lediglich eine entsprechende Anzahl unterschiedlicher Gehäuserückwände. Entsprechend dem jeweiligen LKW-Typ, für den der betreffende Aussenrückblickspiegel bestimmt ist, wird das Lager-Gehäuse aus zwei entsprechenden Teilen zusammengesteckt. Die Steckverbindung gewährleistet einen exakten Zusammenbau der beiden Gehäuseteile, ohne hierzu besondere Justierungen vornehmen zu müssen. Nach Zusammenstecken der beiden Gehäuseteile reicht es aus, diese beispielsweise mittels Schrauben gegeneinander festzulegen.

Vorzugsweise sind beide Teile des Gehäuses mit ineinander passenden Zentrierelementen versehen, welche aus Vorsprüngen und auf diese passenden Ausnehmungen in den einzelnen Gehäuseteilen bestehen können. Auch können beide Gehäuseteile ineinanderpassende Führungselemente, beispielsweise eine Schwalbenschwanzführung aufweisen, mit deren Hilfe sie exakt zusammengesteckt werden, so dass sie vibrationsfrei miteinander zu verbinden sind und im zusammengebauten Zustand eine starre Einheit bilden.

Nach einem weiteren Merkmal der Erfindung können die beiden Gehäuseteile zusätzlich mittels zusammenwirkender Keilflächen gegeneinander eingestellt werden, wodurch mit einfachen Mitteln zusätzlich eine spielfreie Verbindung erzielt wird.

Gemäss einer speziellen praktischen Ausführungsform der Erfindung weist das eine Teil des Gehäuses die eine Stirnwand desselben und seine Rückwand auf, während das andere Teil wie eine Art geschlossenes Gehäuse ausgebildet ist, welches das Lager für den Spiegel-Arm und die Rast enthält. Da das die Rückwand aufweisende Gehäuse-Teil zweckmässig die geschlossene Sitrnwand des Gehäuses umfasst, kann dieses Teil schnell und problemlos auf das andere Gehäuseteil aufgesteckt werden, nachdem der Spiegel-Arm in diesem Gehäuseteil montiert worden ist.

Nach einem weiteren Merkmal der Erfindung enthält die an dem einen Gehäuseteil vorgesehene Rückwand eine Anzahl von Löchern zum Durchstecken von Befestigungselementen wie Schraubenbolzen, so dass für die verschiedensten Montagefälle stets geeignet positionierte Löcher zur Verfügung stehen.

Das erfindungsgemäss ausgebildete Lagergehäuse besteht beispielsweise aus zwei Spritzgussteilen aus Kunststoff oder Leichtmetall. Das das eigentliche Lager aufnehmende Gehäuseteil kann so ausgebildet werden, dass eine Nachbearbeitung zur Anpassung an unterschiedliche LKW-Typen nicht erforderlich ist. Das die Rückwand des Gehäuses aufweisende Gehäuseteil lässt sich ebenfalls mit einer Spritzgussform herstellen, wobei dann lediglich die Auflagefläche der Rückwand dem jeweiligen Fahrzeug-Typ entsprechend nachbearbeitet werden muss, damit die gewünschte Wölbung, Schrägstellung und dergleichen erzielt wird. Dies ist mit verhältnismässig geringem Aufwand möglich.

Durch die Erfindung wird ein einfacher Weg gewiesen, preiswert das als Rastlagerung dienende Lager für den bügelartigen Arm von LKW-Aussenrückblickspiegeln unterschiedlichen LKW-Typen entsprechend auszubilden.

In der Zeichnung ist ein Ausführungsbeispiel des erfindungsgemässen Lagers dargestellt, und zwar zeigt

Fig. 1 einen senkrechten Schnitt durch das zusammengebaute Lager, woraus die Lagerung des entsprechenden Endes des bügelartigen Armes für einen LKW-Aussenrückblickspiegel zu erkennen ist,

Fig. 2 einen senkrechten Schnitt durch das die geschlossene Stirnwand und die Rückwand aufweisende eine Gehäuseteil,

Fig. 3 eine Ansicht des Gehäuseteils aus Fig. 2 von unten und

Fig. 4 eine Draufsicht auf das Gehäuseteil aus Fig. 2 und 3 in Richtung des Pfeiles X.

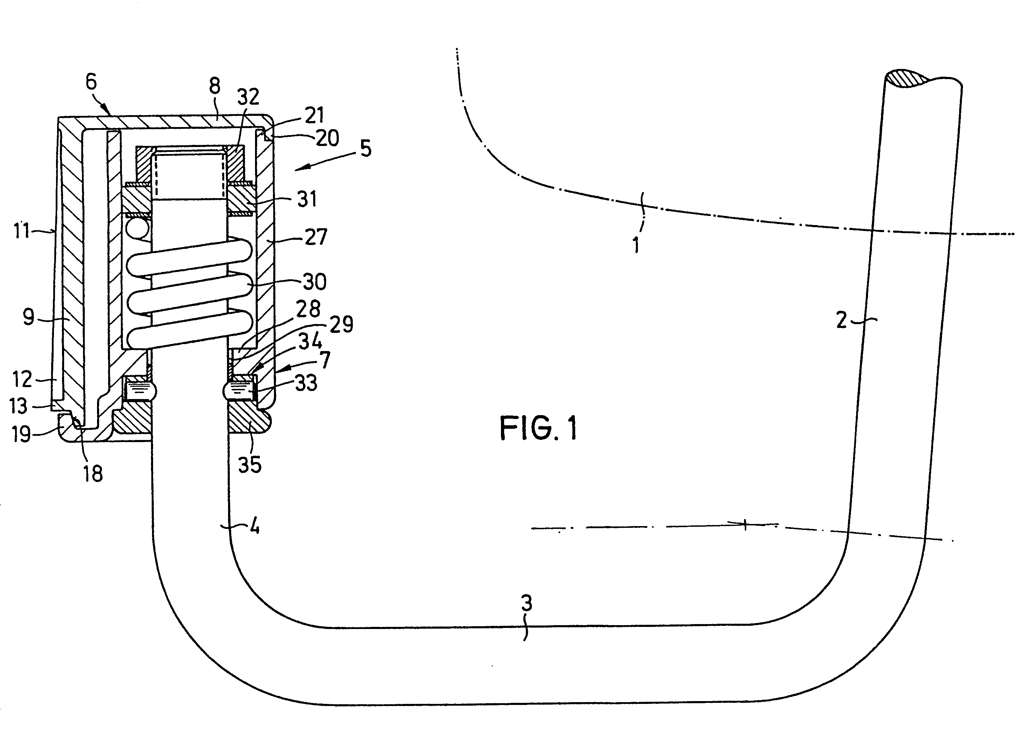

Ein in Fig. 1 nur angedeuteter Aussenrückblickspiegel 1 ist an einem aus Rohrmaterial bestehenden bügelartigen Arm 2 in bekannter Weise angebracht. Der bügelartige Arm 2 weist am oberen und unteren Ende jeweils eine Abwinklung 3 auf, wobei in der Zeichnung nur die Abwinklung 3 am unteren Ende des Armes 2 dargestellt ist. Das obere Ende des Armes 2 ist einfacher gelagert, jedoch ist dieser Teil der Lagerung nicht Gegenstand der vorliegenden Erfindung, so dass eine Darstellung nicht notwendig ist.

An die Abwinklung 3 des Armes 2 schliesst sich ein erneut abgewinkeltes Ende 4 an, das neben dem Hauptteil des Armes 2 verläuft, jedoch nicht unbedingt parallel dazu. Dieses Ende 4 ist in einem Gehäuse 5 gelagert, das an der nicht dargestellten Karosserie des LKW montiert ist.

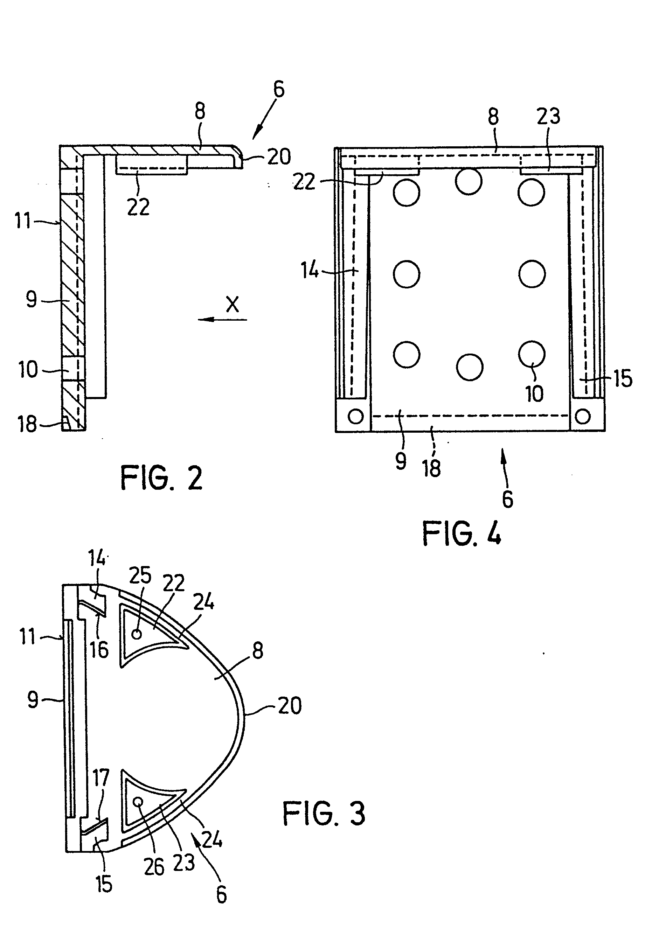

Das Gehäuse 5 besteht aus zwei Gehäuseteilen 6 und 7. Einzelheiten des Gehäuseteiles 6 sind in den Fig. 2 bis 4 zu erkennen. Diese Gehäuseteile 6 und 7 sind zusammensteckbar ausgebildet und können mittels nicht dargestellter Schrauben oder dergleichen in der in Fig. 1 dargestellten zusammengesteckten Position gegeneinander fixiert werden.

Das Gehäuseteil 6 besteht im wesentlichen aus der geschlossenen oberen Stirnwand 8 und der etwa rechtwinklig hierzu verlaufenden Rückwand 9 des Gehäuses 5. Die Rückwand 9 ist als durchgehende Montageplatte ausgebildet und enthält eine Mehrzahl von durchgehenden Löchern 10, durch die bei der Montage an der jeweils gewünschten Stelle Befestigungselemente wie nicht dargestellte Schraubenbolzen gesteckt werden können. Im allgemeinen genügt es, zwei oder maximal drei Löcher 10 für die Montage zu benutzen. Es ist aber eine grössere Anzahl von Löchern 10 in der Rückwand 9 vorgesehen, um für die zweckmässigste Montage eine grössere Auswahl von Löchern zur Verfügung zu haben.

Die Aussenseite 11 der Rückwand 9 wird beispielsweise durch eine mechanische Bearbeitung der Oberfläche der Karosserie des LKW's, an der sie angebracht werden soll, angepasst. Beispielsweise ist die Rückseite oder Aussenseite der Rückwand gewölbt, geneigt, schräggestellt ausgebildet oder sonstwie konturiert, um eine flächige Auflage auf der Fahrzeugkarosserie des jeweiligen LKW-Typs zu gewährleisten. Die Rückwand 9 kann an der Aussenseite eine Ausnehmung 12 enthalten, so dass die Auflagefläche zur Fahrzeugkarosserie auf den äusseren umlaufenden Rand 13 begrenzt ist, was die Anbringung an einer Karosserie vereinfacht.

An der Innenseite der Rückwand 9 sind seitlich sich in Längsrichtung erstreckende Stege 14 und 15 angeformt, die jeweils eine schräggestellte Führungsfläche 16 bzw. 17 aufweisen. Diese Führungsflächen 16 und 17 wirken, wenn die Gehäuseteile 6 und 7 zusammengesteckt sind, mit entsprechenden Gegenflächen des Gehäuseteils 7 zusammen und bilden somit eine Art Schwalbenschwanzführung. Am unteren Ende der Rückwand 9 ist auf deren Aussenseite eine keilförmige Ausnehmung 18 vorgesehen, die, wie Fig. 1 zeigt, hinter eine keilförmige Nase 19 des Gehäuseteiles 7 greift, wenn die Gehäuseteile 6 und 7 vollständig zusammengesteckt sind.

Die Stirnwand 8 ist mit einem nach innen vorstehenden Flansch 20 ausgestattet, der einen Steg 21 am oberen Ende des Gehäuseteils 7 übergreift, wenn die beiden Gehäuseteile 6 und 7 in der in Fig. 1 dargestellten Weise zusammengesteckt sind. Ferner sind an der Innenseite der Stirnwand 8 Zapfenelemente 22 und 23 vorgesehen, welche in das Gehäuseteil 7 hineinragen, wenn die Gehäuseteile 6 und 7 zusammengesteckt sind. Die Zapfenelemente 22 und 23 sind so geformt und angeordnet, dass sich zwischen diesen und dem Flansch 20 jeweils eine Nut 24 befindet, in welche der Steg 21 des Gehäuseteils 7 passt, so dass durch das Zusammenwirken des Flansches 20 und der Zapfenelemente 22 und 23 mit dem Steg 21 eine Zentrierung erzielt wird, wenn die Gehäuseteile 6 und 7 zusammengesteckt werden. Eine weitere Zentrierung erfolgt über die oben beschriebene Schwalbenschwanzführung. Schliesslich trägt das Zusammenwirken der Keilfläche 18 mit der Nase 19 ebenfalls zur Zentrierung und Fixierung der zusammengesteckten Gehäuseteile 6 und 7 bei.

Im Bereich der Zapfenelemente 22 und 23 enthält die Stirnwand 8 Löcher 25 und 26, durch welche nicht dargestellte Schrauben in nicht dargestellte Konsolen am Gehäuseteil 7 eingeschraubt werden können, um die zusammengesteckten Gehäuseteile 6 und 7 gegeneinander zu fixieren.

Das Gehäuseteil 7 hat einen zylindrischen Abschnitt 27, in den durch eine in einem Zwischenboden 28 befindliche Öffnung 29 das Ende 4 des Armes 2 hineinragt. Auf diesem Ende 4 befindet sich innerhalb des zylindrischen Abschnittes 27 eine Schraubenfeder 30, die zwischen dem Zwischenboden 28 und einer auf das Ende 4 aufgesteckten Lagerscheibe 31 liegt. Mittels einer auf das Ende 4 aufgeschraubten Mutter 32 ist die Lagerplatte 31 gegen die Feder 30 angestellt.

Unterhalb des Zwischenbodens 28 ist durch das Ende 4 des Armes 2 ein Stift 33 gesteckt, der mit einer Rastscheibe 34 zusammenwirkt, so dass der Arm 2 normalerweise in einer eingestellten Position gehalten wird, sich jedoch abschwenken lässt, wenn auf denselben eine Kraft, beispielsweise ein Stoss, ausgeübt wird, die die Kraft der mittels der Lagerscheibe 31 und der Mutter 32 vorgespannten Schraubenfeder 30 übersteigt.

Ein Kragen 35 bildet eine Abdeckung nach unten und bewirkt zusammen mit der Lagerscheibe 31 die konzentrische Lagerung des Endes 4 des Armes 2 im Gehäuseteil 7.

## Patentansprüche

1. Haltevorrichtung für Aussenrückblickspiegel (1) von LKW, mit einem zwei zusammensteckbare Teile (6, 7) aufweisenden, an der Karosserie des LKW anzubringenden Lager für das eine Ende (4) eines bügelartigen Armes (2) des Aussenrückblickspiegels (1), das ein Gehäuse (5) aufweist, durch dessen eine Stirnseite das Ende (4) des Armes (2) in das Gehäuse hineinragt und dort federnd nachgiebig und in der normalen Betriebsstellung eingerastet gelagert ist, wobei das eine Teil (6) des Lagers eine an die Karosserie des LKW anlegbare Wand (9) aufweist und das andere Teil (7) das eigentliche Lager (31, 35) und die Rasteinrichtung (33, 34) aufnimmt, dadurch gekennzeichnet, dass das Gehäuse (5) aus zwei zusammensteckbaren Teilen (6 und 7) besteht, von denen das eine (6) die eine geschlossene Stirnwand (8) des Gehäuses (5) und seine Rückwand (9) aufweist und das andere (7) das Lager (31, 35) für den Spiegel-Arm (2) und die Rasteinrichtung (33, 34) enthält.

2. Vorrichtung nach Anspruch 1, dadurch gekennzeichnet, dass die beiden Teile (6 und 7) des Gehäuses (5) ineinanderpassende Zentrierelemente (16, 17; 18, 19; 20 bis 24) aufweisen.

3. Vorrichtung nach Anspruch 1 oder 2, dadurch gekennzeichnet, dass die beiden Teile (6 und 7) des Gehäuses (5) über eine Führung (16, 17), insbesondere eine Schwalbenschwanzführung, zusammenzustecken sind.

4. Vorrichtung nach einem der Ansprüche 1 bis 3, dadurch gekennzeichnet, dass die beiden Teile (6 und 7) des Gehäuses (5) mittels zusammenwirkender Keilflächen (18, 19) gegeneinander einzustellen sind.

5. Vorrichtung nach einem der Ansprüche 1 bis 4, dadurch gekennzeichnet, dass die an dem einen Teil (6) des Gehäuses (5) vorgesehene Rückwand (9) eine Anzahl von Löchern (10) zum Durchstecken von Befestigungselementen wie Schraubenbolzen enthält.

## Claims

1. Catching device for the arm of a lorry rearview mirror (1), comprising a support fixed at the lorry body for receiving one end (4) of a bracket-type arm (2) of rearview mirror (1), said support consisting of two mating portions (6, 7) and comprising a housing (5) through the front face of which extends end (4) of arm (2) into said housing where it is resiliently supported and locked in normal operating position, and wherein one portion (6) of said support comprises a wall (9) contacting the lorry body, while the other portion receives the actual support (31, 35) as well as the locking device (33, 34) characterized in that housing (5) consists of a pair of mating portions (6, 7) one portion (6) of which comprises a closed front wall (8) of housing (5) as well as its rear wall (9), while the other portion (7) comprises support (31, 35) for rearview mirror arm (2) as well as the locking device (33, 34).

2. Catching device as defined by claim 1, characterized in that both portions (6, 7) of housing (5) comprise mating centering elements (16, 17; 18, 19; 20 to 24).

3. Catching device as defined by either of claims 1 or 2, characterized in that portions (6 and 7) of housing (5) are assembled by means of a guiding element (16, 17), in particular a dovetail guide element.

4. Catching device as defined by either of claims 1 to 3, characterized in that portions (6 and 7) of housing (5) are mutually adjustable by means of co-operating wedge surfaces (18, 19).

5. Catching device as defined by either of claims 1 to 4, characterized in that rear wall (9) provided at one portion (6) of housing (5) is provided with a plurality of holes (10) for receiving fastening elements such as bolts.

## Revendications

1. Dispositif de fixation pour le bras d'un rétroviseur exterieur (1) d'un véhicule utilitaire comprenant un support fixé sur la corrosserie du véhicule utilitaire et consistant de deux composants (6, 7) enfichables, le dit support recevant l'une des extrémités (4) d'un bras (2) du rétroviseur (1) et comprenant un boîtier (5) dont la paroi avant est traversée par l'extrémité (4) du bras (2), la dite extrémité (4) étant supportée à l'intérieur du boîtier de manière élastique et verrouillée en position opérationnelle normale, et dans lequel l'un des composants (6) du support comprend une paroi (9) adaptable à la carrosserie du véhicule utilitaire, tandis que l'autre composant (7) reçoit le support (31, 35) lui-même ainsi que le dispositif de verrouillage (33, 34) caractérisé en ce que le boîtier (5) consiste de deux composants (6, 7) enfichables, dont l'un des composants (6) comprend une paroi avant (8) fermée du boîtier (5) ainsi qu'une paroi arrière (9), tandis que l'autre conposant (7) comprend le support (31, 35) du bras (2) du rétroviseur ainsi que le dispositif de verrouillage (33, 34).

2. Dispositif de fixation suivant la revendication 1, caractérisé en ce que les deux composants (6 et 7) du boîtier (5) comprennent des éléments de centrage enfichables (16, 17; 18, 19; 20 à 24).

3. Dispositif de fixation suivant l'une des revendications 1 ou 2, caractérisé en ce que les deux composants (6 et 7) du boîtier (5) sont enfichables au moyen d'un guide (16, 17), en particulier un guide à queue d'hirondelle.

4. Dispositif de fixation suivant l'une des revendications 1 à 3, caractérisé en ce que les deux composants (6 et 7) du boîtier (5) sont ajustables l'un par rapport à l'autre au moyen de surfaces coopérantes.

5. Dispositif de fixation suivant l'une des revendications 1 à 4, caractérisé en ce que la paroi arrière prévue sur l'un des composants (6) du boîtier (5) comprend une pluralité de perçages (10) pour recevoir des éléments de fixation, tels que des boulons.

FIG. 1

FIG. 2

FIG. 3

FIG. 4